# FASCICULE DE BREVET EUROPEEN

(11) **EP 2 695 110 B1**
(45) Date de publication et mention de la délivrance du brevet: **29.07.2015**
(21) Numéro de dépôt: 12721326.2
(22) Date de dépôt: 04.04.2012
(51) Int. Cl.: G06K 19/077

(54) **PROCÉDÉ DE FABRICATION D'INSERTS POUR PASSEPORT ÉLECTRONIQUE**
VERFAHREN ZUR HERSTELLUNG VON EINSÄTZEN FÜR ELEKTRONISCHE PÄSSE
METHOD FOR MANUFACTURING INSERTS FOR ELECTRONIC PASSPORTS

(30) Priorité: 05.04.2011 FR 1101018
(43) Date de publication de la demande: 12.02.2014
(73) Titulaire: Smart Packaging Solutions (SPS), 13106 Rousset Cedex (FR)
(72) Inventeur: RIPERT, Anne, F-13106 Marseille (FR); VOLPE, Pierre, F-13390 Auriol (FR); CUENOT, Yves-Pierre, F-13600 La Ciotat (FR); HENAUT, Guillaume, F-13120 Gardanne (FR)
(74) Mandataire: Nicolle, Olivier
(86) Numéro de dépôt international: PCT/FR2012/000127
(87) Numéro de publication internationale: WO 2012/136905

(56) Documents cités:
- WO-A1-01/03188
- US-A1- 2003 178 495

## Description

L'invention concerne un nouveau procédé de fabrication d'inserts électroniques pour des documents d'identification, notamment des passeports électroniques, ainsi que la structure de l'insert obtenu par la mise en oeuvre du procédé.

### Etat de la technique

On connaît déjà des procédés de fabrication de passeports électroniques comportant d'une part un livret composé de feuilles de papier superposées et reliées par une reliure centrale, dans lesquels au moins l'une des feuilles du livret comporte plusieurs couches en matière plastique et/ou en papier ainsi qu'un insert souple pourvu d'un module électronique et d'une antenne, ledit insert étant intégré entre deux couches voisines de la feuille pourvue de l'insert. Voir documents WO 01/03188-A1 et US 2003/0178495-A1.

### Inconvénients de l'état de la technique

La fabrication des inserts actuellement utilisés pour des documents tels que les passeports électroniques, pose plusieurs problèmes.

Un premier problème tient à la succession des étapes de fabrication de l'insert lui-même. En effet, selon le procédé de fabrication connu, on dispose sur une feuille support en papier ou en matière plastique, un film adhésif, sur lequel on dispose une antenne métallique ainsi qu'un module électronique que l'on connecte en général électriquement à l'antenne. Puis on revêt l'ensemble d'une autre couche de film adhésif, et enfin on superpose une secondé feuille de support. Lorsque l'empilement est complet, on lamine l'ensemble dans une presse de lamination, ce qui a pour effet de solidariser les différentes couches entre elles du fait de la présence des couches d'adhésif.

Dans le procédé connu, la pression de lamination est destinée à être appliquée sur la surface totale de l'insert, mais dans le cas où le module électronique est en surépaisseur, même légère, la pression appliquée localement sur le module, qui présente une surface très inférieure à celle de l'insert, peut être de l'ordre de 200 fois supérieure à la pression nominale. Cette pression excessive exercée sur le module peut quelquefois soit le briser, soit briser les connections éventuelles entre les plots de l'antenne et ceux du module électronique.

Ceci est très gênant car les rendements de fabrication en sont négativement affectés. Cela est d'autant plus préjudiciable, sur le plan économique, que le module électronique, qui intègre une puce électronique, représente le composant le plus coûteux de l'insert.

Un autre problème du procédé de fabrication d'inserts selon l'état de la technique, tient au fait que l'adhésif utilisé est un adhésif en rouleau, pourvu d'une protection ou d'un support d'adhésif, encore appelé « liner » en terminologie anglo-saxonne. La mise en oeuvre d'un tel adhésif pourvu d'un « liner » est à la fois couteuse et susceptible de présenter des défauts affectant le rendement global de fabrication.

Un troisième problème lié au procédé de fabrication d'inserts selon l'état de la technique, tient au fait que l'antenne, en raison de son coût relativement élevé, n'est en général pas déposée sur l'intégralité de la surface du support. Or l'antenne d'un tel insert possède une épaisseur de l'ordre de 80 micromètres, alors que l'insert lui-même possède une épaisseur totale de l'ordre de 400 micromètres. On voit donc que l'absence d'antenne sur une partie importante de la surface de l'insert est de nature à créer un effet de « marche », une irrégularité dans l'épaisseur de l'insert, alors que les cahiers des charges des passeports électroniques imposent des normes de planéité des feuilles des passeports de plus en plus draconiennes. Il est connu en soi de compenser la surépaisseur due à l'antenne, par l'interposition d'une feuille de compensation d'épaisseur, mais elle est d'une mise en oeuvre délicate et représente un coût supplémentaire et un risque de chute de rendement de fabrication supplémentaire.

### Buts de l'invention

Un but général de l'invention est par conséquent de proposer un nouveau procédé de fabrication d'inserts électroniques destinés à être intégrés dans des documents de sécurité tels que des passeports électroniques, procédé qui soit à même de résoudre les problèmes techniques mentionnés plus haut.

Un but plus spécifique de l'invention est de proposer un procédé de fabrication amélioré qui permette de réaliser des inserts pour passeports électroniques, sans que le module électronique de l'insert ne soit soumis à la pression de lamination appliquée au reste de l'insert.

Un autre but de l'invention est de proposer un procédé de fabrication d'inserts qui soit à même de produire des inserts présentant moins de défauts de planéité, ce qui permettra leur intégration plus discrète dans des documents de sécurité comme les passeports électroniques.

Un autre but de l'invention est de proposer un procédé de fabrication d inserts ayant un coût unitaire plus faible, un rendement de fabrication plus élevé, et des cadences de production plus élevées.

### Résumé de l'invention

Ces buts sont atteints par le procédé de fabrication selon l'invention, et par la nouvelle structure d'insert proposée.

A cet effet, l'invention a pour objet un procédé de fabrication d'inserts électroniques, et des inserts électroniques, tels que définis dans les revendications.

Selon le principe de l'invention, le module électronique n'est plus intégré à l'insert avant la lamination de celui-ci, mais les couches de support, d'antenne et d'adhésif sont laminées ensemble d'abord, et le module électronique n'est reporté qu'après la lamination, dans une cavité prévue à cet effet. Ceci permet d'éviter que le module électronique ne soit détérioré par l'application d'une pression excessive.

En outre, afin d'optimiser l'étape de lamination des couches de l'insert avant intégration du module, il est utile de modifier et faciliter la mise en oeuvre des adhésifs assurant la cohésion de l'insert. Le procédé selon l'invention prévoit d'utiliser des adhésifs imprimés directement sur les couches de support des inserts, en lieu et place des adhésifs en rouleaux ou en feuilles utilisés jusque là.

Le procédé selon l'invention prévoit également d'utiliser, pour compenser l'épaisseur de l'antenne, une couche de compensation directement imprimée dans la zone dépourvue d'antenne, en lieu et place des feuilles de compensation d'épaisseur utilisées jusque là. Cela permet d'éviter la manutention de feuilles d'adhésif.

Plus précisément, l'invention a donc pour objet un procédé de fabrication d'inserts selon la revendication 1.

De cette manière, un module électronique de bonne qualité et préalablement testé, n'est inséré dans chaque cavité d'insert qu'après l'étape de lamination des couches de celui-ci, ce qui évite au module électronique d'être soumis à la pression de lamination.

De façon avantageuse, le procédé de fabrication selon l'invention prévoit que chaque module électronique est appliqué dans une cavité correspondante de l'insert à l'aide d'une faible pression, inférieure sensiblement d'au moins deux ordres de grandeur par rapport à la pression de lamination du support.

Ainsi, la pression de fixation du module électronique pendant l'étape dite d'encartage est par exemple de l'ordre de 10 à 20 kgf/cm2.

De préférence, l'adhésif disposé entre les feuilles de support et les antennes, est un adhésif imprimé sur le support.

De façon avantageuse, le procédé comporte en outre une étape consistant à imprimer sur la face interne d'au moins l'une des feuilles de support, une bande de compensation d'épaisseur, en dehors de la zone du support destinée à recevoir l'antenne.

L'invention a également pour objet un insert pour la fabrication d'un passeport électronique, caractérisé en ce qu'il est réalisé selon le procédé de fabrication décrit plus haut.

L'invention a encore pour objet un livret pour passeport, caractérisé en ce qu'il intègre entre au moins deux de ses feuilles, un insert du type précédent.

D'autres caractéristiques et avantages de l'invention apparaîtront à la lecture de la description détaillée et des dessins annexés, dans lesquels :
- la figure 1 représente un organigramme du procédé de fabrication d'inserts pour passeports électroniques, selon l'état de la technique ;
- la figure 2 représente l'organigramme du procédé de fabrication d'inserts, tel que modifié selon la présente invention ;
- la figure 3 représente une vue en plan d'un ensemble de deux inserts, avant individualisation par découpe ;
- les figures 4A et 4B représentent l'insert de la figure 3, conforme à l'état de la technique, en vue en coupe selon la coupe A-A de la figure 3 ;
- les figures 5A et 5B représentent l'insert de la figure 3, en vue en coupe selon la coupe A-A de la figure 3, mais en intégrant les modifications structurelles issues du procédé de fabrication modifié selon l'invention.

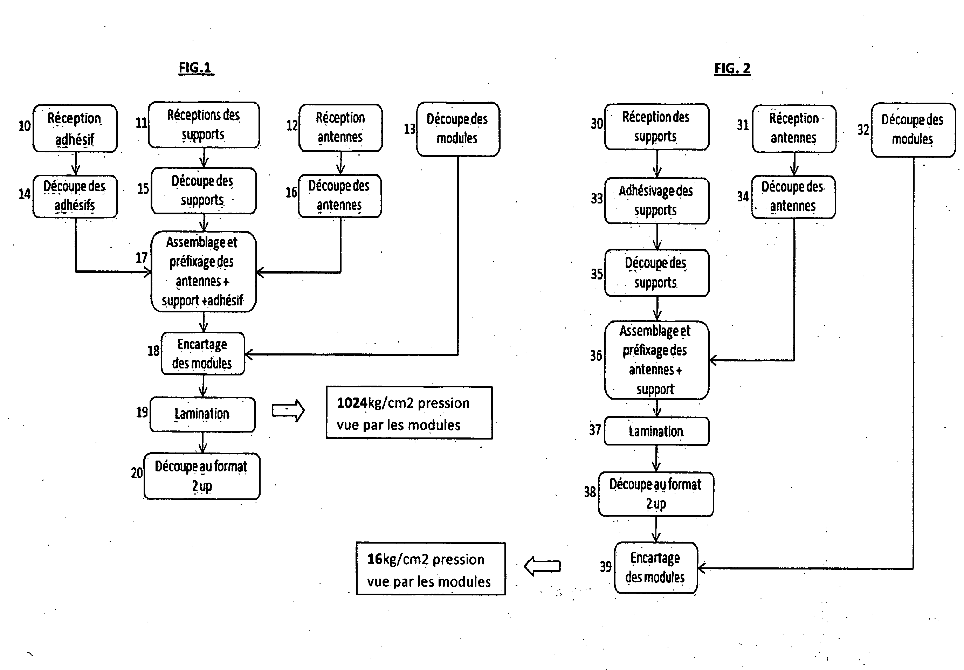

On se réfère à la figure 1. On a représenté dans cette figure un organigramme d'un procédé classique de fabrication d'inserts électroniques pour documents de sécurité. Les premières étapes 10,11,12 en parallèle consistent à approvisionner les composants à assembler, à savoir des feuilles (étape 10) ou des rouleaux d'adhésif, des feuilles de substrat en papier ou en matière plastique (étape 11), des antennes (étape 12) qui se présentent généralement sous la forme de feuilles très fines revêtues d'une antenne métallique sérigraphiée, ou gravée, imprimée, voire cousue, et des modules électroniques (approvisionnés à l'étape 13) qui comportent essentiellement une puce électronique encapsulée et des plages de contacts destinées à être mises en contact avec des plages correspondantes de l'antenne.

Après la phase (10,11,12,13) d'approvisionnement des composants, dont certains sont présentés dans un format correspondant à une pluralité d'inserts (c'est le cas notamment des supports qui sont présentés sous la forme de feuilles de grandes dimensions), on procède à une découpe (étapes 14,15,16) des composants afin de faciliter l'assemblage d'inserts individuels.

Les supports ou substrats sont approvisionnés en feuilles, et il est nécessaire (étape 15) d'y découper des cavités pour recevoir les modules, et de les découper entre eux pour adapter le nombre de positions (par exemple 2, 3 ou 4 positions) au nombre d'inserts que les machines pourront laminer en parallèle.

Il est possible, notamment pour des antennes sérigraphiées, qu'elles soient elles aussi approvisionnées en feuilles portant chacune plusieurs antennes, de sorte qu'il faille aussi les découper (étape 16) en un nombre correspondant à celui du nombre d'inserts fabriqués en parallèle.

Puis, au lieu de procéder à l'assemblage simultané d'un grand nombre d'inserts, qui serait trop complexe à mettre en oeuvre, on assemble alors simultanément un ou deux ou trois inserts.

Pour l'assemblage d'un insert (étape 17), on reporte sur un support inférieur une feuille d'adhésif, puis les antennes et, de nouveau, une feuille d'adhésif ainsi éventuellement qu'une feuille de compensation d'épaisseur pour la zone non recouverte par l'antenne. La feuille d'adhésif est typiquement revêtue d'un support de protection ou «liner», qu'il faut retirer sur les 2 feuilles d'adhésif citées ci dessus. Puis on reporte une feuille de support supérieure, puis on procède à la dépose des modules, ce qui correspond au report d'un module électronique (étape 18) avec un positionnement relatif adéquat sur le support, et on lamine l'ensemble (étape 19) dans une presse de lamination, avant de procéder à une découpe finale (étape 20) ayant pour effet de découper une planche de deux ou davantage d'inserts, qui seront plus tard découpés en inserts individualisés par le fabricant du passeport électronique.

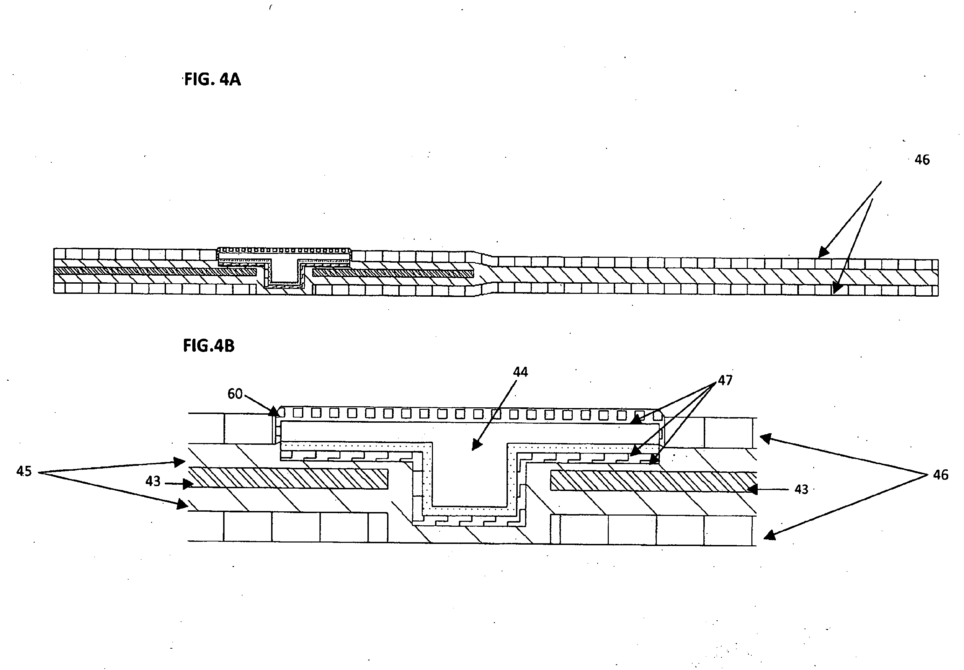

Il ressort de ce procédé connu que le module électronique, qui représente le composant le plus coûteux de l'insert, et qui est le plus souvent en relief par rapport au support (voir figure 4B, repère 60), est par conséquent lui-même soumis à la pression de lamination, de l'ordre de 1000 kgf/cm2, avec les problèmes de rebut que cela génère, comme expliqué précédemment.

On se réfère maintenant à la figure 2 qui représente un organigramme du procédé de fabrication modifié selon l'invention.

De façon similaire au procédé connu, on commence par approvisionner et préparer (étapes 30,31,32) les composants nécessaires, à savoir des feuilles en matière plastique ou en papier destinées à la réalisation des supports, des antennes sérigraphiées, gravées ou autres, et des modules électroniques individualisés.

De préférence avant de découper les feuilles de support, on procède (étape 33) à leur adhésivage. Cette opération consiste à revêtir les feuilles de support (inférieure et/ou supérieure) d'un adhésif, notamment d'un adhésif imprimé, par exemple par jet de matière, transfert à chaud, enduction ou autre.

Puis on procède (étape 35) à la découpe des supports et à la réalisation de cavités dans les supports, ces cavités étant destinées à recevoir les modules électroniques.

Ensuite on procède (étape 36) à l'assemblage des inserts, qui comporte plusieurs sous-étapes. Ainsi, on dépose une antenne préalablement découpée à partir d'une feuille portant une pluralité d'antennes, sur chaque support inférieur adhésivé. Puis on reporte au-dessus de l'antenne un élément de support supérieur, de préférence également préalablement adhésivé. Ensuite on applique une faible pression, manuellement ou de façon automatisée, afin de préfixer les éléments ensemble pour permettre leur manipulation plus aisée.

Après l'assemblage de l'insert, on procède (étape 37) à la lamination de cet empilement, selon les procédés de lamination bien connus. Les couches de l'empilement tel que réalisé ne comportent que des composants passifs qui supportent aisément la pression de lamination typique.

Si cela est encore nécessaire à ce stade (en fonction de la taille initiale des feuilles de support), on découpe (étape 38) les feuilles empilées et laminées, en ensembles correspondant à deux ou trois futurs inserts, en fonction des besoins de la machine d'encartage utilisée pour le report des modules.

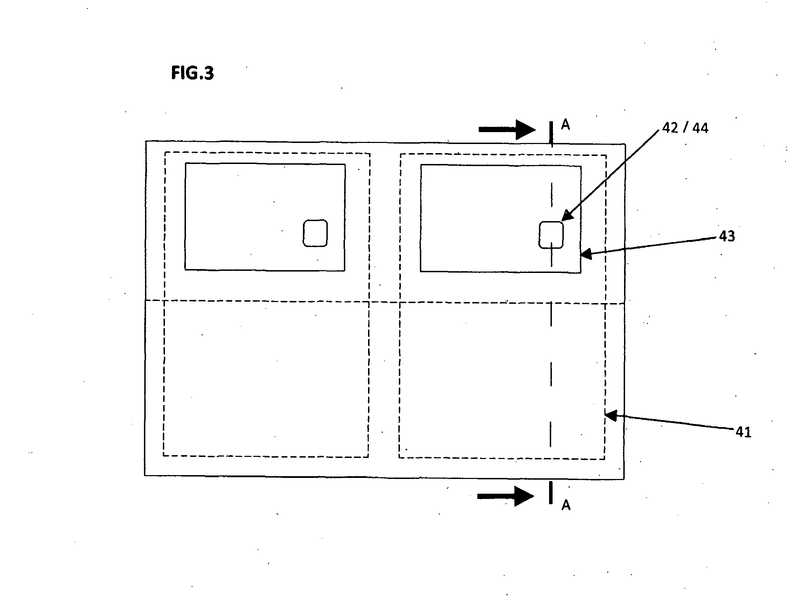

Puis on procède à l'encartage des modules (étape 39), à savoir le report des modules préalablement individualisés, dans la cavité correspondante prévue à cet effet (voir figure 3) sur chaque insert, et on applique une faible pression (de l'ordre de 16 kgf/cm²) sur chaque module, ce qui a pour effet de fixer mécaniquement le module à l'insert, au niveau d'une zone adhésivée de celui-ci.

Il résulte de ce procédé de fabrication modifié que les modules ne sont mis en oeuvre qu'après l'étape de lamination des inserts, ce qui a un effet positif sur les rendements de fabrication, puisque les modules ne peuvent plus être détruits pendant la lamination. En outre, l'usage de supports préalablement adhésivés permet de supprimer la manipulation de feuilles d'adhésif et permet d'augmenter, à savoir de multiplier sensiblement par deux, la cadence de fabrication des inserts.

La figure 3 montre en vue de dessus deux inserts 41 encore solidaires, avant insertion d'un module (non représenté) dans chaque cavité 42, et individualisation des inserts 41 par découpe.

On se réfère maintenant à la figure 4 qui représente en vue en coupe A-A de la figure 3, la structure d'un insert tel que fabriqué selon le procédé conforme à l'état de la technique. La figure 4A représente la coupe dans son ensemble, et la figure 4B représente une vue en coupe plus détaillée de l'insert au voisinage du module électronique 44.

Comme on le constate, il y a une légère surépaisseur 60 au niveau de la surface supérieure du module, même après lamination, ce qui montre bien que c'est avant tout le module 44 qui a été exposé dans son ensemble à la pression de lamination.

En outre, du fait de la présence de l'antenne 43 sur la partie gauche de l'insert, celui-ci présente une surépaisseur 70 de sa partie gauche par rapport à sa partie droite dépourvue d'antenne.

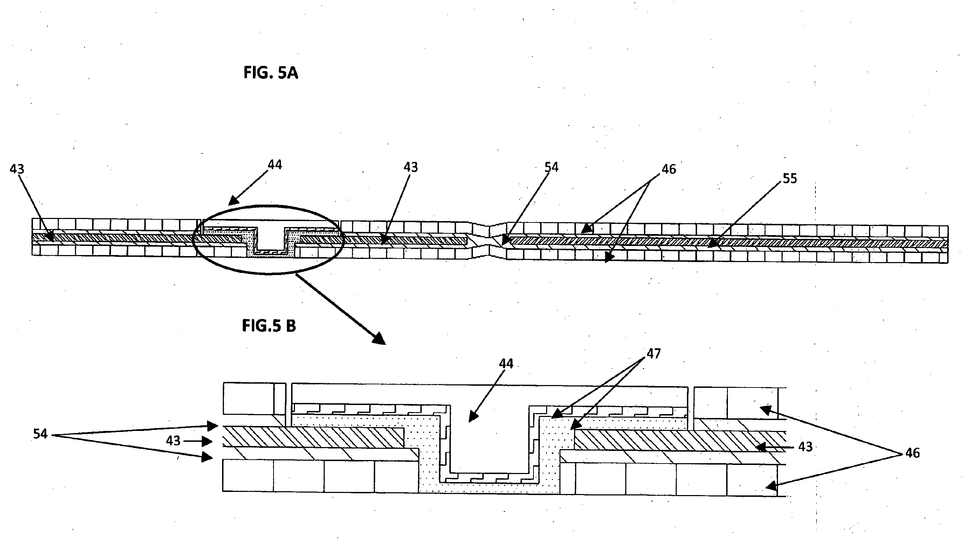

On se réfère maintenant à la figure 5 qui représente en coupe A-A de la figure 3, la structure d'un insert 41 tel que fabriqué selon le procédé modifié par l'invention. La figure 5A représente la coupe de l'insert 41 dans son ensemble, et la figure 5B représente une vue en coupe plus détaillée de l'insert au voisinage du module électronique 44.

Comme on le constate, outre le fait que le module 44 n'a été inséré dans sa cavité 42 qu'après la lamination, le différentiel d'épaisseur entre la zone (à gauche) pourvue du module électronique et la zone (à droite) dépourvue de module, a été compensée par l'insertion d'une couche 55 de compensation d'épaisseur. Cette couche 55 de compensation d'épaisseur peut être obtenue par l'insertion d'une feuille de compensation en matière plastique ou en papier. Mais de préférence, cette couche, d'une épaisseur très fine de l'ordre de 80 micromètres par exemple, est obtenue par impression.

Les couches de support 46 sont par exemple en Teslin (marque déposée), et l'adhésif 54 est de préférence déposé sur chaque couche de support 46 par sérigraphie, au lieu des feuilles d'adhésif utilisées jusque là, qui nécessitaient un support de protection ou « liner» .

Les adhésifs 54 utilisés pour la fabrication des inserts 41 peuvent être des matières thermoplastiques (polyuréthanes, polyesters, polyiamides, ...) ou des matières thermodurcissables (polyesters, phénoliques, époxydes, ...).

### AVANTAGES DE INVENTION :

L'encartage des modules électroniques après la lamination des inserts pour passeport selon le procédé conforme à l'invention présente une série d'avantages, parmi lesquels:
   - La suppression du cycle de contrainte sur le module lors de la lamination dans la presse. Cela permet de mieux contrôler la température et la pression exercée sur le module.
   - Une fiabilité accrue de l'insert, du fait de la réduction des contraintes mécaniques et thermiques durant la fabrication de l'insert.
   - Des cadences de fabrication plus élevées, en raison notamment de la suppression des étapes de manutention des feuilles d'adhésif, les feuilles de support étant maintenant préalablement adhésives, par exemple par impression de colle.
   - Une meilleure planéité des inserts, du fait d'une compensation d'épaisseur plus efficace et moins couteuse.
   - Les rebuts sont fortement diminués et le rendement global de fabrication augmenté, car on l'encartage des modules après lamination permet de n'encarter que des bons modules dans de bons inserts, et cette opération dite d'encartage est effectuée selon des procédés bien maitrisés.

### Légendes dés dessins :

43 : antenne
44 : module électronique
45 : feuille d'adhésif
46 : support ou substrat
47 : adhésif du module
54 : adhésif imprimé sur support
55 : couche de compensation d'épaisseur

## Revendications

1. Procédé de fabrication d'inserts (41) pourvus d'un module électronique (44) portant une puce et d'une antenne (43), comportant des étapes consistant à:
- approvisionner (30) des feuilles de support (46) pour plusieurs inserts, lesdits supports étant pourvus de cavités (42) pour le report ultérieur d'un module électronique dans chaque cavité ;
- approvisionner (31) une antenne pour chaque insert;
- approvisionner (33) au moins une couche d'adhésif ;
- approvisionner (32) un module électronique pour chaque insert ;
- (36) superposer et assembler par lamination (37) une feuille de support (46), une première couche d'adhésif (54), une pluralité d'antennes (43), une seconde couche d'adhésif (54) et une autre feuille de support (46);
- découper (38) l'ensemble laminé de manière à obtenir des inserts pourvus chacun d'une antenne;
- reporter les modules électroniques (44) dans les cavités (42) après l'étape de lamination (37) des feuilles de support (46), des antennes (43) et des couches d'adhésif (54),
**caractérisé en ce qu'**il comporte en outre une étape consistant à imprimer sur la face interne d'au moins l'une des feuilles de support (46), une couche de compensation d'épaisseur (55), en dehors de la zone du support (46) destinée à recevoir l'antenne (43).

2. Procédé de fabrication selon la revendication 1, **caractérisé en ce que** chaque module électronique (44) est pré-fixé (étape 36) dans une cavité (42) correspondante de l'insert (41) à l'aide d'une faible pression, inférieure sensiblement d'au moins deux ordres de grandeur par rapport à la pression de lamination pendant l'étape (37) de lamination des feuilles du support.

3. Procédé de fabrication selon la revendication 2, **caractérisé en ce que** la pression de fixation du module électronique (44) pendant l'étape d'encartage (39) est de l'ordre de 10 à 20 kgf/cm2.

4. Procédé de fabrication selon l'une quelconque des revendications précédentes, **caractérisé en ce que** l'adhésif (54) disposé entre les feuilles de support (46) et les antennes (43) est un adhésif imprimé sur les feuilles de support (46).

5. Insert (41) pour la fabrication d'un passeport électronique, **caractérisé en ce qu'**il est réalisé selon le procédé de fabrication selon l'une quelconque des revendications précédentes.

6. Livret, notamment livret pour passeport, **caractérisé en ce qu'**il intègre entre au moins deux de ses feuilles, un insert (41) selon la revendication 5.

## Patentansprüche

1. Verfahren zur Herstellung von Einsätzen (41), die mit einem elektronischen Modul (44) das einen Chip trägt, und einer Antenne (43) versehen sind, das die folgenden Schritte umfasst:
- Bereitstellen (30) von Trägerblättern (46) für mehrere Einsätze, wobei die Träger mit Ausnehmungen (42) für das nachträgliche Einfügen eines elektronischen Moduls in jeder Ausnehmung versehen sind;
- Bereitstellen (31) einer Antenne für jeden Einsatz;
- Bereitstellen (33) mindestens einer Klebstoffschicht;
- Bereitstellen (32) eines elektronischen Moduls für jeden Einsatz;
- (36) Übereinanderlegen und Zusammenfügen durch Laminieren (37) eines Trägerblatts (46), einer ersten Klebstoffschicht (54), einer Vielzahl von Antennen (43), einer zweiten Klebstoffschicht (54) und eines anderen Trägerblatts (46);
- Schneiden (38) des laminierten Verbundes, um Einsätze zu erhalten, die jeweils mit einer Antenne versehen sind;
- Einfügen der elektronischen Module (44) in die Ausnehmungen (42) nach dem Schritt zum Laminieren (37) der Trägerblätter (46), der Antennen (43) und der Klebstoffschichten (54),
**dadurch gekennzeichnet, dass** es ferner einen Schritt umfasst, der darin besteht, auf die Innenseite mindestens eines der Trägerblätter (46), außerhalb des Trägerbereichs (46) eine Dickenausgleichsschicht (55) zu drucken, die dazu bestimmt ist, die Antenne (43) aufzunehmen.

2. Verfahren zur Herstellung nach Anspruch 1, **dadurch gekennzeichnet, dass** jedes elektronische Modul (44) in einer entsprechenden Ausnehmung (42) des Einsatzes (41) durch einen geringen Druck vorbefestigt ist (Schritt 36), der bezogen auf den Laminationsdruck während des Schritts (37) zum Laminieren der Trägerblätter im Wesentlichen um mindestens zwei Größenordnungen kleiner ist.

3. Verfahren zur Herstellung nach Anspruch 2, **dadurch gekennzeichnet, dass** der Druck zur Befestigung des elektronischen Moduls (44) während des Schritts zum Einstecken (39) in der Größenordnung von 10 bis 20 kgf/cm² liegt.

4. Verfahren zur Herstellung nach einem der vorhergehenden Ansprüche, **dadurch gekennzeichnet, dass** der Klebstoff (54), der zwischen den Trägerblättern (46) und den Antennen (43) angebracht ist, ein Klebstoff ist, der auf die Trägerblätter (46) gedruckt ist.

5. Einsatz (41) für die Herstellung eines elektronischen Passes, **dadurch gekennzeichnet, dass** er gemäß dem Verfahren zur Herstellung nach einem der vorhergehenden Ansprüche ausgeführt wird.

6. Heft, insbesondere Passheft, **dadurch gekennzeichnet, dass** zwischen mindestens zwei seiner Blätter ein Einsatz (41) nach Anspruch 5 eingebunden ist.

## Claims

1. Method for manufacturing inserts (41) provided with an electronic module (44) bearing a chip and an antenna (43), comprising the steps consisting in:
- providing (30) lower and upper support sheets (46) for several inserts, said supports being provided with cavities (42) for the subsequent insertion of an electronic module in each cavity;
- providing (31) an antenna for each insert;
- providing (33) at least one layer of adhesive;
- providing (32) an electronic module for each insert;
- superimposing (36) and assembling by lamination (37) a support sheet (46), a first layer of adhesive (54), a plurality of antennas (43), a second layer of adhesive (54) and another support sheet (46);
- cutting out (38) the laminated assembly in such a way as to obtain inserts each provided with an antenna;
- inserting the electronic modules (44) into the cavities (42) after the step of lamination (37) of the support sheets (46), the antennas (43) and the layers of adhesive (54),
**characterized in that** it furthermore comprises a step consisting in printing, on the inside face of at least one of the support sheets (46), a thickness-compensation layer (55), outside of the area of the support (46) intended for receiving the antenna (43) .

2. Manufacturing method according to Claim 1, **characterized in that** each electronic module (44) is prefixed (step 36) in a corresponding cavity (42) of the insert (41) using a light pressure, less by substantially at least two orders of magnitude with respect to the laminating pressure during the step (37) of lamination of the support sheets.

3. Manufacturing method according to Claim 2, **characterized in that** the fixing pressure of the electronic module (44) during the insertion step (39) is of the order of 10 to 20 kgf/cm2.

4. Manufacturing method according to any one of the preceding claims, **characterized in that** the adhesive (54) deposited between the support sheets (46) and the antennas (43) is an adhesive printed on the support sheets (46).

5. Insert (41) for the manufacture of an electronic passport, **characterized in that** it is produced according to the manufacturing method according to any one of the preceding claims.

6. Booklet, notably booklet for a passport, **characterized in that** it integrates an insert (41) according to Claim 5 between at least two of its pages.
